# EUROPÄISCHE PATENTSCHRIFT

(11) **EP 0 576 720 B1**
(45) Veröffentlichungstag und Bekanntmachung des Hinweises auf die Patenterteilung: **27.03.1996**
(21) Anmeldenummer: 92112487.1
(22) Anmeldetag: 21.07.1992
(51) Int. Cl.: G01D 5/38

(54) **Optische Anordnung**
Optical arrangement
Dispositif optique

(30) Priorität: 27.06.1992 DE 4221165
(43) Veröffentlichungstag der Anmeldung: 05.01.1994
(73) Patentinhaber: Dr. Johannes Heidenhain GmbH, D-83292 Traunreut (DE)
(72) Erfinder: Holzapfel, Wolfgang, Dr., W-8201 Obing (DE); Huber, Walter, W-8220 Traunstein (DE)

(56) Entgegenhaltungen:
- EP-A- 0 163 362
- EP-A- 0 363 620

## Beschreibung

Die Erfindung betrifft eine optische Längen-oder Winkelmeßanordnung gemäß dem Oberbegriff des Anspruches 1.

Eine derartige Meßeinrichtung ist aus der EP 0 163 362 B1 bekannt. Dort ist angeführt, daß die Fotodetektoren in der Brennebene der Linse angeordnet sind. Die Anordnung der Fotodetektoren in einer Ebene hat aber den Nachteil, daß relativ großflächige Fotodetektoren erforderlich sind, um die gesamte Intensität der einzelnen Strahlenbündel auf die Fotodetektoren zu konzentrieren.

Der Erfindung liegt die Aufgabe zugrunde, demgegenüber eine Längen- oder Winkelmeßeinrichtung zu schaffen, bei der die von einer Abbildungsoptik erfaßten Strahlenbündel vollständig mit kleinflächigen und somit schnellen Fotodetektoren erfaßt werden können.

Diese Aufgabe wird durch eine Längen- oder Winkelmeßeinrichtung mit den Merkmalen des Anspruches 1 gelöst.

Besonders vorteilhafte Ausgestaltungen der Erfindung sind in den abhängigen Ansprüchen angegeben.

Die besonderen Vorteile der Erfindung bestehen darin, daß kleinflächige und somit sehr schnelle Fotodetektoren eingesetzt werden können.

Weiterhin werden von den Fotodetektoren die gesamten Strahlenbündel erfaßt, wodurch eine hohe Intensität der von den Fotodetektoren abgeleiteten Signale garantiert ist. Durch die Erfindung ist gewährleistet, daß auch die Randstrahlen der Strahlenbündel vollständig auf die Fotodetektoren treffen und somit auch der Abtastbereich des Maßstabgitters vollständig und gleichmäßig auf die Fotodetektoren abgebildet wird.

Mit Hilfe von Ausführungsbeispielen wird die Erfindung nachfolgend anhand der Zeichnungen näher erläutert. Es zeigt:
- Figur 1: schematisch den Aufbau und Strahlengang einer Längenmeßeinrichtung gemäß der Erfindung;
- Figur 2: ein weiteres Ausführungsbeispiel einer Längenmeßeinrichtung mit Referenzmarke und
- Figur 3: stark schematisiert eine Längenmeßeinrichtung nach dem Durchlicht-Prinzip.

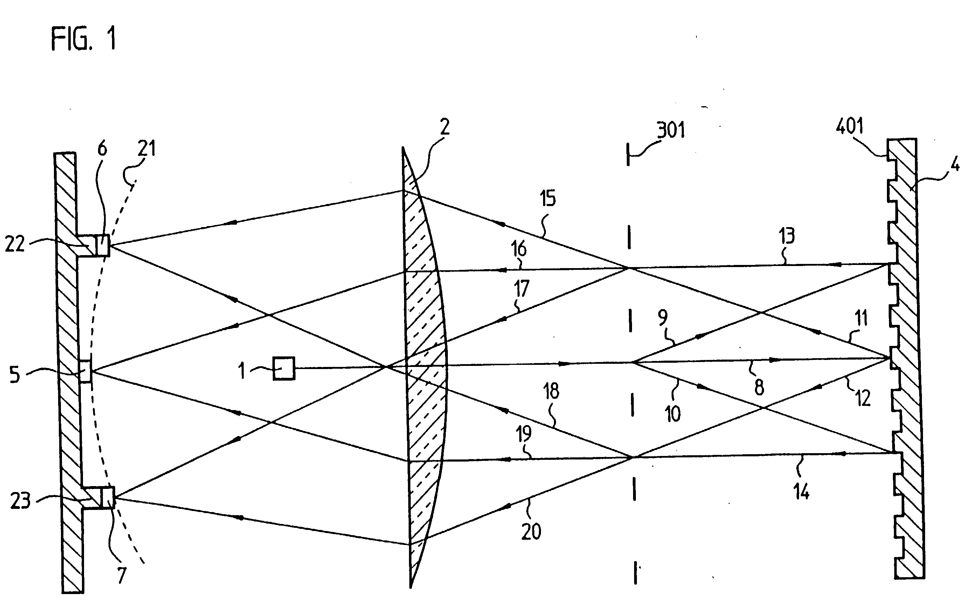

Die in Figur 1 gezeigte lichtelektrische Längenmeßeinrichtung enthält eine Lichtquelle 1, eine Linse 2, eine Abtastplatte 3 mit einem Gitter 301, ein reflektierendes Maßstabgitter 401 und drei Fotodetektoren 5, 6 und 7.

Der Strahlenverlauf wird nur kurz beschrieben, da er ausführlich in der EP 0 163 362 B1 erläutert ist. Demnach wird das von der Lichtquelle 1 erzeugte und der Linse 2 kollimierte Licht beim Durchgang durch das Gitter 301 in drei verschiedene Richtungen gebeugt. Diese ersten gebeugten Teilstrahlenbündel 0. und +1. sowie -1. Beugungsordnung sind in Figur 1 mit den Bezugszeichen 8, 9 und 10 versehen.

Am Maßstabgitter 401 werden die ersten Teilstrahlenbündel 8, 9 und 10 reflektiert und ein weiteres Mal in +1. und -1. Beugungsordnung abgelenkt. Es entstehen zweite gebeugte Teilstrahlenbündel 11, 12, 13 und 14. Diese Teilstrahlenbündel 11, 12, 13 und 14 treten wieder durch das Gitter 301, werden dabei erneut gebeugt und kommen zur Interferenz. Die dadurch erzeugten dritten gebeugten Teilstrahlenbündel 15 bis 20 gleicher Neigung werden von der Linse 2 gesammelt und auf die drei Fotodetektoren 5, 6 und 7 gerichtet, welche die Intensitätsmodulationen in drei um 120° gegeneinander phasenversetzte, elektrische Signale umwandeln. Diese elektrischen Signale bilden ein Maß für die Richtung und Größe der Verschiebung des Gitters 301 gegenüber dem Maßstabgitter 401.

Die Neigung der auf die Linse 2 treffenden Teilstrahlenbündel 15, 18 und 17, 20 hängt von der Teilungsperiode der Gitter 301 und 401 ab. Je kleiner die Teilungsperioden bei einer gegebenen Wellenlänge λ sind, desto größer wird der Neigungswinkel der dritten gebeugten Teilstrahlenbündel 15, 18 und 17, 20 (für λ = const.).

Die Linse 2 bildet die unterschiedlich geneigten Teilstrahlenbündel 15 bis 20 nicht in eine gemeinsamen Ebene ab. Je größer der Neigungswinkel der auf die Linse 2 auftreffenden Teilstrahlenbündel 15 bis 20 ist, desto näher liegt der Punkt optimaler Abbildung - d.h. der Bildpunkt eines Lichtquellenpunktes - an der Linse 2. Durch die Erfindung wird dies berücksichtigt, indem die Fotodetektoren 6, 7 der stärker geneigten Teilstrahlenbündel 15, 18 und 17, 20 näher an der Linse 2 angeordnet sind als der Fotodetektor 5 der im Beispiel nicht geneigten Teilstrahlenbündel 16, 19. Der Abstand zwischen der Linse 2 und den einzelnen Fotodetektoren 5, 6, 7 wird also abhängig vom Neigungswinkel der von der Linse 2 fokussierten Teilstrahlenbündel 15 bis 20 gewählt.

In Figur 1 ist schematisch die durch Bildfeldwölbung erzeugte Bildschale 21 eingezeichnet, auf der die Punkte optimaler Abbildung der von der Linse 2 gesammelten Teilstrahlenbündel 15 bis 20 unterschiedlicher Neigung liegen.

Wenn die Fotodetektoren 5, 6, 7 auf dieser Bildschale 21 angeordnet sind, können sehr kleinflächige Fotodetektoren 5, 6, 7 eingesetzt werden und trotzdem werden die vollständigen Teilstrahlenbündel 15 bis 20 erfaßt. Besonders bei hochauflösenden Meßeinrichtungen mit Gittern 301, 401 kleiner Teilungsperioden und somit großem Neigungswinkel der Teilstrahlenbündel gegen die optische Achse der Linse hat dies den immensen Vorteil, daß sehr schnelle Fotodetektoren 5, 6, 7 eingesetzt werden können. Es ist ja bekannt, daß die Schnelligkeit, d.h. das Frequenzverhalten von Fotodetektoren 5, 6, 7 von der Größe der Empfangsfläche abhängig ist. Je kleiner die Empfangsfläche, desto schneller und besser können die Fotodetektoren 5, 6, 7 die Intensitätsmodulation der Teilstrahlenbündel 15, 18 und 17, 20 erfassen.

Die Fotodetektoren 5, 6, 7 können auf einer Platine in bekannter Weise befestigt werden. Um die unterschiedlichen Abstände zwischen der Linse 2 und den Fotodetektoren 5, 6, 7 zu realisieren, können die Fotodetektoren 6, 7 auf Erhöhungen 22, 23 befestigt werden.

In nicht gezeigter Weise kann auch die Multilayer-Technik eingesetzt werden, indem der Fotodetektor 5 auf einer ersten Platine und die Fotodetektoren 6, 7 auf einer darüberliegenden zweiten Platine angebracht sind. Ebenso sind flexible Platinen, die in geeigneter Weise gewölbt werden, verwendbar.

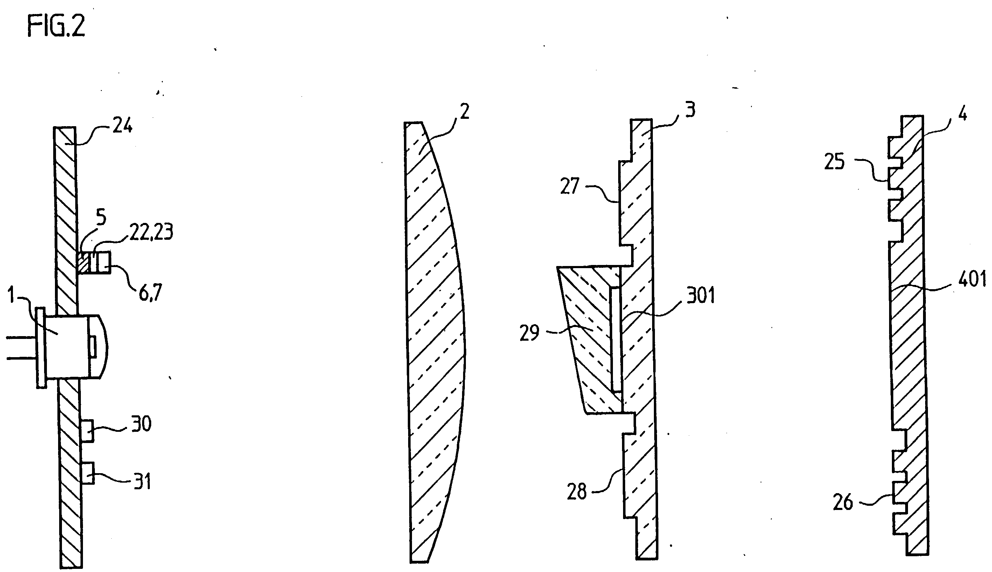

In Figur 2 ist ein weiteres Aufführungsbeispiel einer Längenmeßeinrichtung gezeigt, bei dem neben dem Maßstabgitter 401 Referenzmarken 25, 26 angeordnet sind. Der prinzipielle Aufbau und die Wirkungsweise dieser Längenmeßeinrichtung mit Referenzmarken ist an sich aus der DE 38 34 676 A1 bekannt.

Für gleiche Bauteile wurden in Figur 1 und Figur 2 die gleichen Bezugszeichen verwendet. Nachfolgend werden nur die Unterschiede zum Stand der Technik und zur bereits in Figur 1 beschriebenen Meßeinrichtung erläutert.

Auf einer Platine 24 sind die Lichtquelle 1 und die Fotodetektoren 5, 6, 7 angeordnet. Die Fotodetektoren 6, 7 befinden sich näher an der Linse 2 als der Fotodetektor 5. Außer dem Maßstabgitter 401 befinden sich Referenzmarken 25, 26 auf dem Maßstab 4. Die Abtastplatte 3 weist außer dem Gitter 301 zur Abtastung der Maßstabteilung 401 Referenzmarken-Abtastfelder 27, 28 auf. Über dem Gitter 301 ist ein quer zur Meßrichtung ablenkendes Prisma 29 angeordnet, durch das eine optische Trennung der Abtaststrahlengänge bei der Abtastung des Maßstabgitters 401 und der beiden Referenzmarken 25, 26 erreicht wird. Zur Erzeugung eines Referenzsignales ist den Referenzmarken 25, 26 zumindest ein weiterer Fotodetektor 30, 31 zugeordnet.

Zur optischen Trennung der Abtaststrahlengänge können auch mehrere Prismen eingesetzt werden, welche die Strahlenbündel auf mehrere Fotodetektoren richten. Auch in diesem Fall ist es vorteilhaft, wenn die Prismen zwischen den Fotodetektoren und der Abtastplatte angeordnet sind. Zur besseren Handhabung und Justierung der Prismen ist es vorteilhaft, wenn sie auf einer Platte montiert sind, oder bei Verwendung mehrerer Prismen, diese in einer gemeinsamen Prismenplatte integriert sind.

Beschrieben ist bisher eine Längenmeßeinrichtung mit einem reflektierenden Maßstab 4. Die Erfindung ist nicht darauf beschränkt, sie kann auch bei Winkelmeßeinrichtungen mit einer reflektierenden Teilscheibe als Maßstab und bei Längen- oder Winkelmeßeinrichtungen mit einem transparenten Maßstab, d.h. bei Durchlichtmeßsystemen eingesetzt werden. Auch die Zahl der durchlaufenen Gitter ist nicht auf drei beschränkt. Insbesondere bei Durchlichtmeßeinrichtungen ist eine Anordnung aus zwei Gittern vorteilhaft.

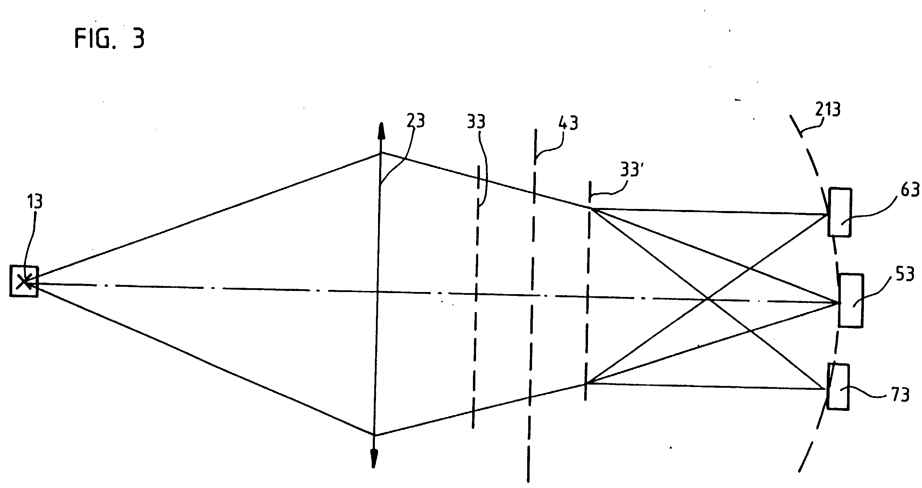

In Figur 3 ist stark schematisiert ein Dreigittergeber nach dem Durchlichtverfahren gezeigt. Von einer Beleuchtungseinrichtung 13 wird Licht ausgesendet und mittels Linse 23 konvergent auf ein erstes Beugungsgitter 33 gerichtet. Dort wird es gebeugt, durchstrahlt ein Maßstabgitter 43, wird erneut gebeugt und fällt auf ein drittes Gitter 33'. Diese Vorgänge entsprechen den zur Figur 1 beschriebenen in analoger Weise.

Diese Anordnung hat noch den Vorteil eines sehr einfachen Aufbaues und hoher Effizienz, verbunden mit günstigem Signalverhalten bei Abstandsänderungen.

Die Abstände der Fotodetektoren 53, 63, 73 von der Abbildungsoptik 23 entsprechen wiederum denen gemäß Figur 1 und sind abhängig von der Neigung der interferierenden Strahlenbündel.

Aus den der Erfindung zugrunde liegenden Prinzipien ergibt sich, daß die Abstandsabhängigkeit der Fotodetektoren vom Neigungswinkel der Teilstrahlenbündel nicht zwangsläufig eine interferentiell arbeitende Positionsmeßeinrichtung erfordert. Dies ist nur ein besonders vorteilhafter Anwendungsfall, bei dem die Erfindung in ganz besonders geeigneter Weise eingesetzt werden kann.

Die dabei verwendeten Gitter können sowohl Phasenals auch Amplitudengitter sein.

Aber auch die Erzeugung von zueinander geneigten Teilstrahlenbündeln mit anderen optischen Elementen außer Gittern wie beispielsweise Prismen, ist möglich. Auch bei derartigen Vorrichtungen ist die Erfindung mit Vorteil einsetzbar.

## Patentansprüche

1. Optische Längen-oder Winkelmeßanordnung zur Erfassung der Intensitätsmodulation von in unterschiedliche Richtungen geneigten Teilstrahlenbündeln, mit einer Beleuchtungseinrichtung und mehreren, relativ zueinander verschiebbaren Gittern, bei der die Intensitätsmodulationen der Teilstrahlenbündel durch Fotodetektoren in zueinander phasenversetzte elektrische Signale umgewandelt werden und bei der eine Abbildungsoptik zum Fokussieren der Teilstrahlenbündel auf die Fotodetektoren vorhanden ist, dadurch gekennzeichnet, daß der Abstand zwischen der Abbildungsoptik (2; 23) und den einzelnen kleinflächigen Fotodetektoren (5, 6, 7; 53, 63, 73) so gewählt ist, daß er von dem Winkel abhängig ist, den die von der Abbildungsoptik (2; 23) fokussierten Teilstrahlenbündel (15, 16, 17, 18, 19, 20) mit der optischen Achse der Abbildungsoptik (2; 23) einschließen.

2. Anordnung nach Anspruch 1, dadurch gekennzeichnet, daß der Abstand zwischen der Abbildungsoptik (2) und einem Fotodetektor (5, 6, 7) umso kleiner ist, je größer der Neigungswinkel ist.

3. Anordnung nach Anspruch 1 oder 2, dadurch gekennzeichnet, daß das Licht der Lichtquelle (1) von einer Linse (2) als Abbildungsoptik kollimiert wird, das kollimierte Licht auf das Gitter (301) einer Abtastplatte (3) fällt wodurch erste gebeugte Teilstrahlenbündel (8, 9, 10) erzeugt werden, daß weiterhin diese ersten gebeugten Teilstrahlenbündel (8, 9, 10) auf das Gitter (401) eines Maßstabes (4) fallen, wo zweite gebeugte Teilstrahlenbündel (11, 12, 13, 14) entstehen, welche vom Gitter (401) des Maßstabes (4) auf Gitterbereiche der Abtastplatte (3) reflektiert werden, wo diese zweiten gebeugten Teilstrahlenbündel (11, 12, 13, 14) wiederum gebeugt werden und dritte gebeugte Teilstrahlenbündel (15; 16, 17, 18, 19, 20) entstehen, welche miteinander interferieren und die dritten Teilstrahlenbündel (15, 16, 17, 18, 19, 20) gleicher Neigung von der Linse (2) gesammelt und auf die Fotodetektoren (5, 6, 7) fokussiert werden.

4. Anordnung nach Anspruch 3, dadurch gekennzeichnet, daß auf dem Maßstab (4) zumindest eine Referenzmarke (25, 26) angeordnet ist, der zumindest ein weiterer Fotodetektor (30, 31) zur Erzeugung eines Referenzsignales zugeordnet ist und zumindest ein Prisma (29) zur optischen Trennung von Maßstabgitter- und Referenzmarken-Abtastung vorhanden ist.

5. Anordnung nach Anspruch 4, dadurch gekennzeichnet, daß zur Erzeugung des Referenzsignales mehrere Fotodetektoren (30, 31) vorgesehen sind und mehrere Prismen zur Strahltrennung zwischen den Fotodetektoren (30, 31) und der Abtastplatte (3) angeordnet sind.

6. Anordnung nach Anspruch 5, dadurch gekennzeichnet, daß die Prismen in einer gemeinsamen Prismenplatte integriert sind.

7. Anordnung nach Anspruch 1 oder 2, dadurch gekennzeichnet, daß mittels einer Abbildungsoptik (23) Beugungsbilder auf den Detektoren (53, 63, 73) erzeugt werden, wobei das Licht mehrere Beugungsgitter (33, 33', 43) durchstrahlt und die gebeugten Teilstrahlenbündel am letzten durchstrahlten Beugungsgitter (33') zur Interferenz gebracht werden.

8. Anordnung nach Anspruch 7, dadurch gekennzeichnet, daß das auf das erste Gitter (33) treffende Licht unkollimiert ist.

9. Anordnung nach Anspruch 8, dadurch gekennzeichnet, daß das auf das erste Gitter (33) treffende Licht konvergiert.

10. Anordnung nach Anspruch 1, dadurch gekennzeichnet, daß Fotodetektoren (6, 7) auf Erhöhungen (22, 23) einer Platte (24) angeordnet sind.

11. Anordnung nach Anspruch 1, dadurch gekennzeichnet, daß die Fotodetektoren auf verschiedenen Ebenen einer Multilayer-Platine angeordnet sind.

12. Anordnung nach Anspruch 1, dadurch gekennzeichnet, daß die Fotodetektoren auf einer gewölbten Platine angeordnet sind.

13. Anordnung nach Anspruch 12, dadurch gekennzeichnet, daß die Platine flexibel ist.

## Claims

1. Optical length or angle measuring arrangement for detection of the intensity modulation of component beam bundles inclined in different directions, with an illumination system and several gratings displaceable relative to one another, wherein the intensity modulations of the component beam bundles are converted into phase-shifted electrical signals by means of photodetectors and wherein an optical imaging means is provided for focussing the component beam bundles onto the photodetectors, characterised in that the distance between the optical imaging means (2; 23) and the individual small-surface photodetectors (5, 6, 7; 53, 63, 73) is selected so that it is dependent on the angle the component beam bundles (15, 16, 17, 18, 19, 20) focussed by the optical imaging means (2; 23) enclose with the optical axis of the optical imaging means (2; 23).

2. Arrangement according to Claim 1, characterised in that the distance between the optical imaging means (2) and a photodetector (5, 6, 7) decreases as the angle of inclination increases.

3. Arrangement according to Claim 1 or 2, characterised in that the light of the light source (1) is collimated by a lens (2) as optical imaging means, the collimated light falls onto the grating (301) of a scanning plate (3), as a result of which first diffracted component beam bundles (8, 9, 10) are generated; that furthermore these first diffracted component beam bundles (8, 9, 10) fall onto the grating (401) of a graduated rod (4), where second diffracted component beam bundles (11, 12, 13, 14) are formed which are reflected by the grating (401) of the graduated rod (4) onto grating regions of the scanning plate (3), where these second diffracted component beam bundles (11, 12, 13, 14) are in turn diffracted and third diffracted component beam bundles (15, 16, 17, 18, 19, 20) are formed which interfere with each other, and the third component beam bundles (15, 16, 17, 18, 19, 20) of the same inclination are collected by the lens (2) and focussed onto the photodetectors (5, 6, 7).

4. Arrangement according to Claim 3, characterised in that disposed on the graduated rod (4) is at least one reference mark (25, 26), to which at least one further photodetector (30, 31) is allocated for generation of a reference signal, and at least one prism (29) is provided to optically separate the scanning of graduated rod gratings and reference marks.

5. Arrangement according to Claim 4, characterised in that several photodetectors (30, 31) are provided for generation of the reference signal and several prisms are arranged between the photodetectors (30, 31) and the scanning plate (3) for beam separation.

6. Arrangement according to Claim 5, characterised in that the prisms are integrated into a joint prism board.

7. Arrangement according to Claim 1 or 2, characterised in that diffraction patterns are generated on the detectors (53, 63, 73) by means of an optical imaging means (23), the light passing through several diffraction gratings (33, 33', 43) and the diffracted component beam bundles being brought to interference on the last diffraction grating (33') passed through by the light.

8. Arrangement according to Claim 7, characterised in that the light striking the first grating (33) is not collimated.

9. Arrangement according to Claim 8, characterised in that the light striking the first grating (33) converges.

10. Arrangement according to Claim 1, characterised in that photodetectors (6, 7) are arranged on raised sections (22, 23) of a board (24).

11. Arrangement according to Claim 1, characterised in that the photodetectors are arranged on different planes of a multilayer board.

12. Arrangement according to Claim 1, characterised in that the photodetectors are arranged on an arched board.

13. Arrangement according to Claim 12, characterised in that the board is flexible.

## Revendications

1. Dispositif optique de mesure de longueurs ou d'angles pour mesurer la modulation en intensité de faisceaux de rayons partiels inclinés dans des direction différentes, avec un dispositif d'éclairage et plusieurs réseaux mobiles les uns par rapport aux autres, dans lequel les modulations en intensité des faisceaux de rayons partiels sont transformées en signaux électriques mutuellement déphasés au moyen de capteurs photo-électriques et dans lequel il est prévu une optique de repoduction pour focaliser les faisceaux de rayons partiels sur les capteurs photo-électriques, caractérisé par le fait que la distance entre l'optique de reproduction (2; 23) et les différents capteurs photo-électriques (5, 6, 7; 53, 63, 73) de petite surface est choisie telle qu'elle dépende de l'angle que forment les faisceaux de rayons partiels (15, 16, 17, 18, 19, 20) focalisés par l'optique de reproduction (2; 23) avec l'axe optique de ladite optique de reproduction (2; 23).

2. Dispositif selon la revendication 1, caractérisé par le fait que la distance entre l'optique de reproduction (2) et un capteur photo-électrique (5, 6, 7) est d'autant plus faible que l'angle d'inclinaison est plus grand.

3. Dispositif selon la revendication 1 ou la revendication 2, caractérisé par le fait que la lumière de la source lumineuse (1) est rendue parallèle au moyen d'une lentille (2) faisant office d'optique de reproduction, que la lumière parallèle frappe le réseau (301) d'une plaque de lecture (3), produisant ainsi des premiers faisceaux de rayons partiels (8, 9, 10) diffractés, par le fait que lesdits premiers faisceaux de rayons partiels (8, 9, 10) diffractés frappent le réseau (401) d'une règle (4) sur laquelle il se forme des deuxièmes faisceaux de rayons partiels (11, 12, 13, 14) diffractés qui sont réfléchis par le réseau (401) de la règle (4) sur des zones de réseau de la plaque de lecture (3), au niveau desquelles lesdits deuxièmes faisceaux de rayons partiels (11, 12, 13, 14) diffractés subissent une nouvelle diffraction et forment des troisièmes faisceaux de rayons partiels (15, 16, 17, 18, 19, 20) diffractés qui interfèrent les uns avec les autres et que les troisièmes faisceaux de rayons partiels (15, 16, 17, 18, 19, 20) de même inclinaison sont concentrés par la lentille (2) et focalisés sur les capteurs photo-électriques (5, 6, 7).

4. Dispositif selon la revendication 3, caractérisé par le fait qu'au moins un repère de référence (25, 26) est disposé sur la règle (4), lequel repère est associé à au moins un capteur photo-électrique (30, 31) supplémentaire aux fins de produire un signal de référence et qu'il est prévu au moins un prisme (29) pour séparer optiquement la lecture du réseau de la règle et la lecture des repères de référence.

5. Dispositif selon la revendication 4, caractérisé par le fait qu'il est prévu pour produire le signal de référence plusieurs capteurs photo-électriques (30, 31) et que plusieurs prismes sont disposés entre les capteurs photo-électriques (30, 31) et la plaque de lectures aux fins de séparer les rayons.

6. Dispositif selon la revendication 5, caractérisé par le fait que les prismes sont intégrés dans une plaque porte-prisme commune.

7. Dispositif selon la revendication 1 ou la revendication 2, caractérisé par le fait qu'au moyen d'une optique de reproduction (23) on produit des images diffractées sur les capteurs (53, 63, 73), la lumière traversant plusieurs réseaux de diffraction (33, 33', 43) et les faisceaux de rayons séparés étant amenés en interférence sur le dernier réseau de diffraction (33') traversé.

8. Dispositif selon la revendication 7, caractérisé par le fait que la lumière qui frappe le premier réseau (33) n'est pas parallèle.

9. Dispositif selon la revendication 8, caractérisé par le fait que la lumière qui frappe le premier réseau (33) est convergente.

10. Dispositif selon la revendication 1, caractérisé par le fait que des capteurs photo-électriques (6, 7) sont disposés sur des surélévations (22, 23) d'une plaque (24).

11. Dispositif selon la revendication 1, caractérisé par le fait que les capteurs photo-électriques sont disposés dans des plans différents d'une platine multicouches.

12. Dispositif selon la revendication 1, caractérisé par le fait que les capteurs photo-électriques sont disposés sur une platine bombée.

13. Dispositif selon la revendication 12, caractérisé par le fait que la platine est souple.
